Europäisches Patentamt

European Patent Office

Office européen des brevets

(19)

(11) Veröffentlichungsnummer : **0 416 429 B1**

# (12) EUROPÄISCHE PATENTSCHRIFT

(45) Veröffentlichungstag der Patentschrift :
**18.11.93 Patentblatt 93/46**

(21) Anmeldenummer : **90116425.1**

(22) Anmeldetag : **28.08.90**

(51) Int. Cl.⁵ : **C08G 73/12**, C08L 79/08, C08F 222/40, C08J 5/24

(54) **Hitzehärtbare Bismaleinimidharze.**

Die Akte enthält technische Angaben, die nach dem Eingang der Anmeldung eingereicht wurden und die nicht in dieser Patentschrift enthalten sind.

(30) Priorität : **05.09.89 DE 3929386**

(43) Veröffentlichungstag der Anmeldung :
**13.03.91 Patentblatt 91/11**

(45) Bekanntmachung des Hinweises auf die Patenterteilung :
**18.11.93 Patentblatt 93/46**

(84) Benannte Vertragsstaaten :
**AT CH DE ES FR GB IT LI NL**

(56) Entgegenhaltungen :
**EP-A- 0 296 112**
**DE-B- 2 818 091**
**US-A- 4 100 140**
**US-A- 4 737 568**

(73) Patentinhaber : **BASF Aktiengesellschaft**
**Carl-Bosch-Strasse 38**
**D-67063 Ludwigshafen (DE)**

(72) Erfinder : **Eisenbarth, Philipp, Dr.**
**Gutleutstrasse 12**
**D-6702 Bad Duerkheim (DE)**
Erfinder : **Peter, Roland, Dr.**
**Pfalzring 92**
**D-6704 Mutterstadt (DE)**
Erfinder : **Folda, Thomas, Dr.**
**Adenauerstrasse 8**
**D-6719 Neuleiningen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 416 429 B1

## Beschreibung

Die Erfindung betrifft hitzehärtbare Bismaleinimidharze mit erhöhter Lagerstabilität.

Bismaleinimidharze, die nach US-A 4 100 140 Alkenylphenole oder Alkenylphenolether als Comonomere enthalten, können zu Werkstoffen mit guten mechanischen und elektrischen Eigenschaften ausgehärtet werden. Bei der Verarbeitung von Prepregs aus Verstärkungsfasern, die mit diesen Bismaleinimidharzen getränkt sind, macht sich jedoch die verhältnismäßig geringe Verarbeitungszeit der Harze bemerkbar. Besonders störend ist dabei die Neigung zu raschem Viskositätsanstieg bzw. zum vorzeitigen Gelieren bei der Herstellung von Wickelkörpern, wo harzgetränkte Rovings bei Temperaturen zwischen 70 und 120°C auf Kerne aufgewickelt werden.

In der EP-A-296 112 wird empfohlen, zu härtbaren Mischungen aus Bismaleinimidharzen und Alkenyl-Comonomeren bestimmte Stabilisatoren, z.B. Dihydroxybenzole, sterisch gehinderte Phenole oder aromatische Amine zuzusetzen, um die Klebrigkeit der Mischungen während der Lagerung für längere Zeit zu erhalten. Es hat sich gezeigt, daß derartige Stabilisatoren bzw. Antioxidantien nicht in der Lage sind, die Verarbeitungszeit der Harze ausreichend zu verlängern.

In der DE-B 28 18 091 ist eine Harzmasse beschrieben aus einer Maleinsäureimid-Verbindung A', die durch Umsetzung eines Kondensationsproduktes aus Anilin, einem Phenol und Formaldehyd mit Maleinsäureanhydrid hergestellt wurde, und einer Allylverbindung B. Als Härtungsmittel sind u.a. auch Borfluorid/AminKomplexe genannt, die bei den speziellen Maleinsaureimid-Verbindungen offenbar die Härtung beschleunigen. Eine Verzögerung des Härtungsvorgangs durch den Zusatz bestimmter Leweis-Säuren kann der Druckschrift nicht entnommen werden.

Der Erfindung lag daher die Aufgabe zugrunde, Bismaleinimidharze mit ausreichend langer Verarbeitungszeit, insbesondere bei erhöhten Temperaturen bereitzustellen, ohne daß durch den Zusatz die mechanischen Eigenschaften entsprechender Formkörper herabgesetzt werden.

Diese Aufgabe wird gelöst durch hitzehärtbare Harze, enthaltend

A) 100 Gew.-Teile eines Bismaleinimids,

B) 5 bis 100 Gew.-Teile einer aromatischen Alkenylverbindung als Comonomer und

C) 0,01 bis 2,0 Gew.-Teile einer Lewis-Säure.

Als Komponente A sind Bismaleinimide ausgewählt aus : 4,4'-Bismaleinimidodiphenylmethan, 4,4'-Bismaleinimidodiphenylether, 3,3'-Bismaleinimidodiphenylsulfon, 1,3-Bismaleinimidobenzol, 2,4-Bismaleinimidotoluol, 1,6-Bismaleinimidohexan und 2,2,4-Trimethyl-1,6-bismaleinimidohexan. Diese Bismaleinimide sind z.B. aus DE-A-2 040 094, DE-A-2 719 903 und DE-A-3 247 058 bekannt.

Alkenylverbindungen B sind ein- oder mehrkernige aromatische Verbindungen mit mindestens einem Alkenylsubstituenten mit 2 bis 6 C-Atomen, wobei die Alkenylgruppe direkt oder über ein Sauerstoffatom an den Benzolring gebunden ist. Bevorzugt sind Allyl- und Propenylverbindungen, insbesondere solche, die sowohl eine OH-Gruppe wie auch eine Alkenylgruppe am gleichen Benzolring besitzen. Hierzu zählen zweikernige Allylphenole, z.B. o,o-Diallylbisphenol A; ebenfalls geeignete Allylphenole basieren z.B. auf Bisphenol F oder entsprechenden Novolaken, Bisphenol S, Hydrochinon oder Dicyclopentadien nach EP-A-276 733. Andere geeignete Alkenylverbindungen sind z.B. 2,6-Di(2-propenylphenoxy)pyridin, 4,4'-Di(2-propenylphenoxy)benzophenon, 4,4'-Bis(2-propenylphenoxy)diphenylsulfon sowie andere Oligomere nach EP-A-230 741. Weitere einsetzbare Alkenylverbindungen B sind Divinylbenzol, Diallylbenzol, Styrol oder $\alpha$-Methylstyrol.

Der Anteil der Alkenylverbindungen B beträgt 5 bis 100 Teile, bezogen auf 100 Teile Bismaleinimid; bevorzugt sind 30 bis 80 Teile. Liegt der Anteil niedriger, so erhöht sich die Viskosität, und die Klebrigkeit entsprechender Prepregs ist zu gering, was zu Problemen beim Verarbeiten führt; bei Anteilen von mehr als 100 Teilen fällt die Glasübergangstemperatur zu stark ab.

Geeignete Lewis-Säuren sind die Halogenide von Bor, Aluminium, Arsen, Antimon, Phosphor, Eisen, Titan, Zinn, Kupfer oder Zink. Sie sind ausführlich in Römpp's Chemielexikon, Band 3, 8. Auflage, Seite 2360 bzw. in der dort genannten, weiterführenden Literatur beschrieben.

Die Lewis-Säuren werden in Mengen von 0,01 bis 2, vorzugsweise 0,02 bis 0,5 Gew.-Teilen, bezogen auf 100 Gew.-Teile A eingesetzt. Bei einem Zusatz von mehr als 2 Gew.-Teilen können die mechanischen Eigenschaften der Formstoffe negativ beeinflußt werden, zu geringe Mengen sind ineffektiv. Durch Variation der Art und Menge an Lewis-Säure kann die Verarbeitungszeit des Harzes gezielt eingestellt werden.

Die Mischungen können als weitere Zusätze Katalysatoren sowie Inhibitoren enthalten. Geeignete Katalysatoren sind tertiäre Amine oder Phosphine, Imidazole oder organische Säuren oder Peroxide. Als Inhibitoren sind Hydrochinon, Benzochinon oder Phenothiazin zu nennen. Die Menge an eingesetzten Initiatoren und Inhibitoren liegt etwa zwischen 0,05 bis 1,0 Gew.-Teilen, bezogen auf 100 Gew.-Teile A.

Ferner können übliche Füllstoffe und Verstärkungsmittel, wie z.B. Quarzpulver, Kaolin, Glimmer, Graphitpulver oder Metallpulver, sowie Glas- und Kohlenstoffasern zugesetzt werden, vorzugsweise in Mengen von 10 bis zu 500 Gew.-Teilen, bezogen auf 100 Gew.-Teile der Komponente A.

Zur Herstellung der erfindungsgemäßen Bismaleinimidharze werden die Ausgangsmaterialien unter Anwendung der üblichen Techniken vermischt und auf Temperaturen zwischen 70 bis 150°C erhitzt, wobei die Bildung eines Präpolymeren erfolgt. Je nach Fortschritt der Vorpolymerisation erhält man eine relativ niedrig viskose Schmelze oder einen glasartig erstarrten Feststoff, der je nach Verwendungszweck gemahlen oder in einem Lösungsmittel gelöst wird. Die Herstellung der Harze kann auch in einem Lösungsmittel erfolgen.

Die erfindungsgemäßen Mischungen sind als Imprägnier-, Gieß- und Laminierharze oder als Formmassen (gefüllt oder ungefüllt) oder als Klebstoffe einsetzbar.

Eine bevorzugte Anwendung ist die Herstellung von Prepregs bzw. Hochleistungsverbundwerkstoffen, wobei die Tränkung von Glas-, Kohlenstoff- oder Aramidfasern unter Bildung von unidirektionalen oder Gewebeprepregs entweder aus der Schmelze bei 50 bis 120°C oder aus Lösung erfolgt. Geeignete Lösungsmittel sind halogenierte Kohlenwasserstoffe, wie z.B. Dichlormethan, Ketone wie z.B. Aceton oder Methylethylketon, Glykolester, Toluol, Dimethylformamid, N-Methylpyrrolidon bzw. Gemische aus diesen Lösungsmitteln.

Bevorzugt ist die Imprägnierung von Rovings aus der Schmelze bei Temperaturen zwischen 50 und 120°C, vorzugsweise zwischen 60 und 90°C. Die Verstärkungsfasern sind in der Vorzugsrichtung des späteren Verbundwerkstoffs orientiert; es kommen übliche Endlosfaserstränge (Rovings) aus Glas, aromatischen Polyamiden und bevorzugt Kohlenstoff in Frage. Von besonderem Vorteil ist, daß auch mehrere Einzel-Rovings, als unidirektionales Faser-Tape oder Gewebe eingesetzt werden können.

Das Volumenverhältnis Kunststoffmatrix zu Verstärkungsfasern liegt bevorzugt zwischen 70:30 und 15:85, insbesondere zwischen 50:50 und 30:70.

Die erfindungsgemäß hergestellten Prepregs können nach üblichen Verfahren zur Herstellung von flächigen Bauteilen geschnitten, übereinandergelegt, verformt oder vorzugsweise zur Herstellung rotationssymmetrischer Bauteile gewickelt werden. Sie werden dann zu Hochleistungsverbundwerkstoffen ausgehärtet, indem man sie auf Temperaturen zwischen 150 und 300°C, vorzugsweise zwischen 160 und 260°C, gegebenenfalls unter Druck, erhitzt. Die gewählte Härtungstemperatur hängt entscheidend von der Länge der Härtungszeit ab und umgekehrt. Vielfach ist eine stufenweise Härtung vorteilhaft, wobei bei einer niedrigeren Temperatur zunächst unter Formgebung eine Vernetzung der Polymeren herbeigeführt wird. Nach Entformen kann sich dann zur vollständigen Aushärtung eine unter Umständen mehrstündige Nachhärtung oberhalb 200°C anschließen.

Diese Hochleistungsverbundwerkstoffe weisen excellente mechanische und thermische Eigenschaften auf und können insbesondere als Formteile für die Automobil-, Luft- und Raumfahrtindustrie eingesetzt werden.

Beispiel

Bismaleinimidharze wurden hergestellt aus 100 Gew.-Teilen 4,4'-Bismaleinimidodiphenylmethan, 67 Gew.-Teile Alkenyl-Comonomer und 0,15 bis 0,3 Gew.-Teile Stabilisator.

Die Gelzeit in (min) wurde bei 180°C (DABA) bzw. 150°C (PPP) gemessen, die Ergebnisse sind in der Tabelle aufgeführt. Dabei bedeuten:
DABA: o,o'-Diallylbisphenol A
PPP : 2,6-Di(2-propenylphenoxy)pyridin

Die Beispiele A bis E sind Vergleichsversuche. In den Beispielen B, C und D wurden Stabilisatoren nach dem Stand der Technik (EP-A-296 112) eingesetzt.

Tabelle

| Beispiel | Comonomer | Stabilisator | Gew.-Teile | Gelzeit (min) |
|---|---|---|---|---|
| A | DABA | - | - | 34 |
| 1 | DABA | $SbCl_5$ | 0,3 | 75 |
| 2 | DABA | $BF_3 \cdot$Ethylamin | 0,3 | 72 |
| 3 | DABA | $BF_3 \cdot$Ethylamin | 0,15 | 61 |
| 4 | DABA | Titantetrabutylat | 0,3 | 65 |
| 5 | DABA | Cu-Naphthenat | 0,3 | 45 |
| 6 | DABA | Dibutylzinndilaurat | 0,3 | 44 |
| 7 | DABA | Fe(III)naphthenat | 0,3 | 44 |
| 8 | DABA | Zn-naphthenat | 0,3 | 41 |
| B | DABA | Hydrochinon | 0,3 | 36 |
| C | DABA | 4,4'-Diamino-diphenylmethan | 0,3 | 31 |
| D | DABA | Irganox 1010 (Polyphenol der Fa. CIBA-GEIGY) | 0,3 | 33 |
| E | PPP | - | - | 35 |
| 9 | PPP | $SbCl_5$ | 0,3 | 43 |
| 10 | PPP | $SbCl_5$ | 0,15 | 41 |

**Patentansprüche**

1. Hitzehartbares Bismaleinimidharz, enthaltend
   A. 100 Gew.-Teile eines Bismaleinimids,
   B. 5 bis 100 Gew.-Teile einer aromatischen Alkenylverbindung,
   C. 0,01 bis 2,0 Gew.-Teile eines als Lewis-Säure wirkenden Halogenids von Bor, Aluminium, Arsen, Antimon, Phosphor, Eisen, Titan, Zinn, Kupfer oder Zink,
   dadurch gekennzeichnet, daß das Bismaleinimid A ausgewahlt ist aus:
   4,4'-Bismaleinimidodiphenylmethan,
   4,4'-Bismaleinimidodiphenylether,
   3,3'-Bismaleinimidodiphenylsulfon, 1,3-Bismaleinimidobenzol,
   2,4-Bismaleinimidotoluol, 1,6-Bismaleinimidohexan und
   2,2,4-Trimethyl-1,6-bismaleinimidohexan.

2. Bismaleinmimidharz nach Anspruch 1, dadurch gekennzeichnet, daß als Alkenylverbindung ein Diallylphenol, vorzugsweise o,o'-Diallylbisphenol A eingesetzt wird.

3. Verwendung eines-Bismaleinimidharzes nach Anspruch 1 zur 3. Herstellung von Kohlenstoffaserprepregs.

4

## Claims

1. A heat-curable bismaleimide resin comprising
   A) 100 parts by weight of a bismaleimide,
   B) 5-100 parts by weight of an aromatic alkenyl compound, and
   C) 0.01-2.0 parts by weight of a Lewis acid halide of boron, aluminum, arsenic, antimony, phosphorus, iron, titanium, tin, copper or zinc,
   wherein the bismaleimide A is selected from: 4,4'-bis-maleimidodiphenylmethane, 4,4'-bismaleimidodiphenyl ether, 3,3'-bismaleimidodiphenyl sulfone, 1,3-bismaleimidobenzene, 2,4-bismaleimidotoluene, 1,6-bismaleimidohexane and 2,2,4-trimethyl-1,6-bismaleimidohexane.

2. A bismaleimide resin as claimed in claim 1, wherein the alkenyl compound used is a diallylphenol, preferably o,o'-diallylbisphenol A.

3. The use of a bismaleimide resin as claimed in claim 1 for fabricating carbon fiber prepregs.

## Revendications

1. Résine thermodurcissable de bismaléimide, contenant
   A. 100 parties en poids d'un bismaléimide,
   B. 5 à 100 parties en poids d'un composé alcénylique aromatique,
   C. 0,01 à 2,0 parties en poids d'un halogénure de bore, d'aluminium, d'arsenic, d'antimoine, de phosphore, de fer, de titane, d'étain, de cuivre ou de zinc agissant comme acide de Lewis,
   caractérisée en ce que le bismaléimide A est choisi parmi
   le 4,4'-bismaléimidodiphénylméthane,
   le 4,4'-bismaléimidodiphényléther,
   la 3,3'-bismaléimidodiphénylsulfone,
   le 1,3-bismaléimidobenzène,
   le 2,4-bismaleimidotoluène,
   le 1,6-bismaléimidohexane et
   le 2,2,4-triméthyl-1,6-bismaléimidohexane.

2. Résine de bismaléimide selon la revendication 1, caractérisée en ce qu'on utilise, comme composé alcénylique, un diallylphénol, de préférence l'o,o'-diallylbisphénol A.

3. Utilisation d'une résine de bismaléimide selon la revendication 1 pour la fabrication de préimprégnés de fibres de carbone.